(19) Europäisches Patentamt
European Patent Office
Office européen des brevets

(11) **EP 3 385 905 A1**

(12) **EUROPEAN PATENT APPLICATION**

(43) Date of publication:
**10.10.2018 Bulletin 2018/41**

(51) Int Cl.:
***G06T 7/00*** (2017.01)   ***G06T 7/48*** (2017.01)

(21) Application number: **18162766.2**

(22) Date of filing: **20.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.04.2017 GB 201705405**

(71) Applicant: **Rolls-Royce plc**
**London SW1E 6AT (GB)**

(72) Inventors:
• **Vadakke Matham, Murukeshan**
  **Derby, Derbyshire DE24 8BJ (GB)**
• **Haridas, Aswin**
  **Derby, Derbyshire DE24 8BJ (GB)**
• **Crivoi, Alexandru**
  **Derby, Derbyshire DE24 8BJ (GB)**
• **Patinharekandy, Prabhathan**
  **Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(54) **DETERMINING SURFACE ROUGHNESS**

(57)    A measurement system (301) for determining surface roughness is shown. A coherent illumination device (303) illuminates the surface of, for example, a component (201) with coherent light. An imaging device (304) obtains an image of speckle caused by the scattering of the coherent light from the surface. A processing device (305) converts the image into a binary image according to a threshold, thereby classifying pixels below the threshold as background pixels and pixels above the threshold as foreground pixels. It then evaluates the fractal dimension of the binary image. The fractal dimension correlates with surface roughness. An indication of the surface roughness of the surface is then outputted.

Fig. 3

EP 3 385 905 A1

## Description

## TECHNICAL FIELD

This disclosure relates to methods and systems for determining the roughness of surfaces.

## BACKGROUND OF THE INVENTION

Optical methods of surface roughness characterisation are well-established. A known approach is to illuminate a surface with coherent light from a laser. The light scattered from the surface may then be directly imaged, allowing capture of a speckle pattern. As the speckle pattern is caused by constructive and destructive interference of the laser light, which is at least in part dependent upon the surface geometry down to the wavelength scale, the image of the speckle pattern may be processed to estimate the surface roughness.

However, problems exist in terms of optimising the efficiency of the image processing pipeline such that the technique may be used for on-line surface roughness measurement.

## SUMMARY OF THE INVENTION

The invention is directed towards methods of and systems for determining surface roughness.

The method includes obtaining an image of speckle caused by the scattering of coherent light from a surface. Then, the image is converted into a binary image according to a threshold, thereby classifying pixels below the threshold as background pixels and pixels above the threshold as foreground pixels. Then, the fractal dimension of the binary image is evaluated, wherein the fractal dimension correlates with surface roughness.

There is also provided a measurement system which implements the method, and instructions executable by a computer which cause the computer to perform the method.

## BRIEF DESCRIPTION OF THE DRAWINGS

Embodiments will now be described by way of example only with reference to the accompanying drawings, which are purely schematic and not to scale, and in which:

Figure 1 shows a sectional side view of a turbofan engine;
Figure 2 shows a plan view of the fan of the engine of Figure 1;
Figure 3 shows a measurement system according to the present invention;
Figure 4 shows components within the processing device forming part of the measurement system of Figure 3;
Figure 5 shows steps carried out by the measurement system to determine surface roughness;
Figure 6 shows steps carried out to obtain images of the speckle caused by the scattering of coherent light from a surface;
Figure 7A, 7B and 7C show images of the speckle obtained by the method of Figure 6;
Figure 8 shows steps carried out to process the images obtained by the method of Figure 6;
Figure 9 shows steps carried out to produce binary images;
Figures 10A, 10B and 10C show binary images produced by the method of Figure 9;
Figure 11 shows steps carried out to determine the fractal dimension of the binary images; and
Figure 12 shows a plot of fractal dimension against surface roughness.

## DETAILED DESCRIPTION OF EXAMPLE EMBODIMENTS

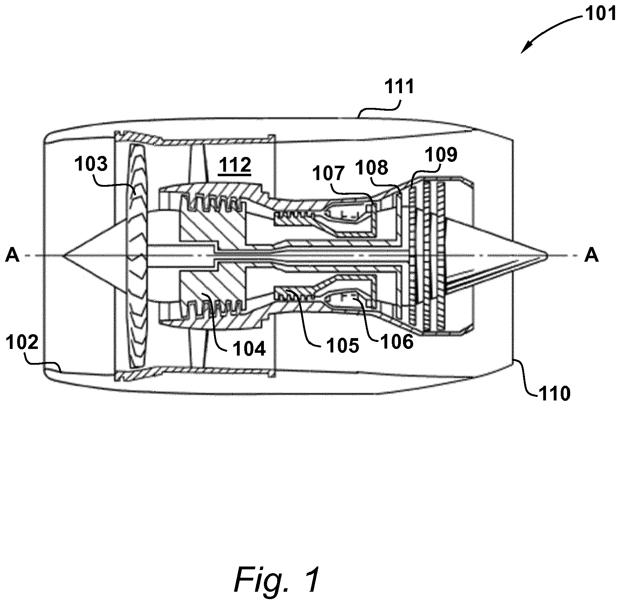

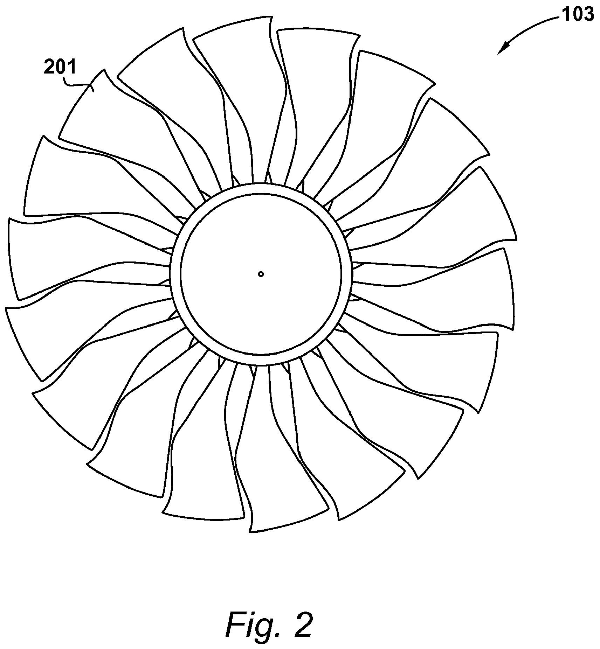

A turbofan engine is shown in Figure 1, with its fan being shown in plan view in Figure 2.

The engine **101** has a principal and rotational axis **A-A** and comprises, in axial flow series, an air intake **102,** a propulsive fan **103,** an intermediate pressure compressor **104,** a high-pressure compressor **105,** combustion equipment **106,** a high-pressure turbine **107,** an intermediate pressure turbine **108,** a low-pressure turbine **109,** and an exhaust nozzle **110.** A nacelle **111** generally surrounds the engine **101** and defines both the intake **102** and the exhaust nozzle **110.**

The engine **101** works in the conventional manner so that air entering the intake **102** is accelerated by the fan **103** to produce two air flows: a first air flow into the intermediate pressure compressor **104** and a second air flow which passes through a bypass duct **112** to provide propulsive thrust. The intermediate pressure compressor **104** compresses the air flow directed into it before delivering that air to the high pressure compressor **105** where further compression takes place.

The compressed air exhausted from the high-pressure compressor 105 is directed into the combustion equipment **106** where it is mixed with fuel and the mixture combusted. The resultant hot combustion products then expand through, and thereby drive the high pressure turbine **107,** intermediate pressure turbine **108,** and low pressure turbine **109** before being exhausted through the nozzle **110** to provide additional propulsive thrust. The high pressure turbine **107,** intermediate pressure turbine **108,** and low pressure turbine **109** drive respectively the high pressure compressor **105,** intermediate pressure compressor **104,** and fan **103,** each by a suitable interconnecting shaft.

As the fan **103** is the one of the first components encountered by air entering the intake **102** of the engine **101,** it is particularly important to ensure that the blades **201** of the fan **103,** identified in Figure 2, are optimised aerodynamically.

Many developments have therefore taken place in terms of improving fan blade geometry (i.e. on the macro scale). This has resulted in fan blades, such as those forming part of the fan **103,** having complex surfaces with high degrees of variation in curvature.

However, it is also important to ensure that air flow is optimised by ensuring the surface roughness of the fan blades **201** is within acceptable limits (i.e. on the micro scale).

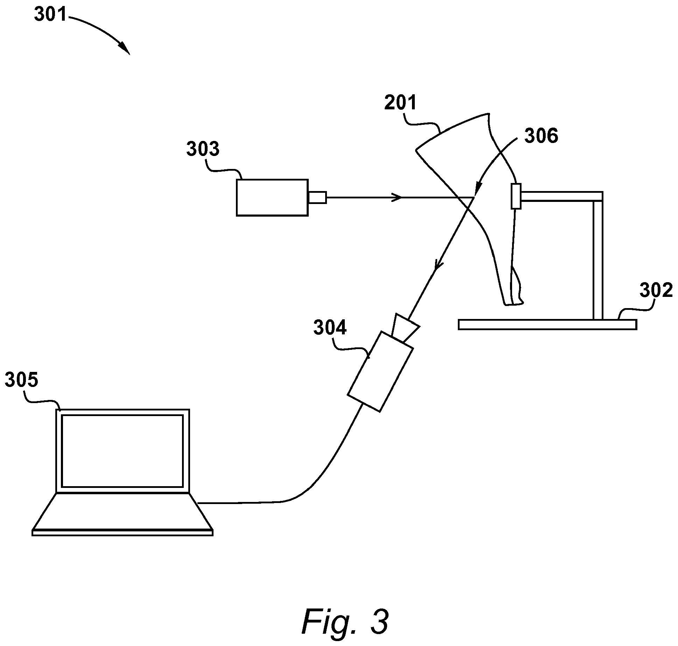

A measurement system for determining the roughness of a surface according to an aspect of the present invention is illustrated in Figure 3.

The measurement system is indicated generally at **301,** and may be employed for determining the roughness of the fan blade **201** to ensure its surface roughness meets the design specification. However, it will be appreciated that the principles employed by the system allow it to be used for measurement of the roughness of any surface, such as bearings, or the ball of a prosthesis, etc.

Measurement system **301** includes a fixture **302** in which a component may be mounted, such as the fan blade **201** in this example. The exact configuration of the fixture **302** will be understood by those skilled in the art as not being central to the present invention, and instead any fixture in which the component whose roughness is being measured may be held can be used.

A coherent illumination device such as, in this example, a laser **303** is provided to illuminate the surface of the component being analysed. In the present example, the laser **303** is an infrared laser configured to output coherent light at a wavelength of 1064 nanometres at a power of 80 watts. It will be appreciated that different wavelengths and/or different output powers may be adopted depending upon the particular application of the measurement system. Furthermore, the beam width may be selected to match the desired sample area and thus is dependent on the component and the parameters of the testing being undertaken. Thus in an example, an appropriate optical arrangement may be provided to broaden or narrow, and then collimate the light emanating from the laser **303.**

In operation, laser light from the laser **303** is directed towards to surface of the component, and is scattered. Due to the generally rough surface of the component, the path length of the wavefronts is such that interference occurs and the intensity of the light varies across the scattered light field. Thus the scattered light field is related to the surface geometry which caused the scattering.

The scattered light field is therefore imaged by an imaging device, which in this example is a camera **304.** The camera **304** is in the present example an infrared-sensitive indium gallium arsenide (InGaAs) camera, which in the present example is fitted with a 25 millimetre lens with a fixed aperture of $f$/16. Of course, it will be appreciated by those skilled in the art that the particular imaging device may be chosen in dependence upon the specifications of the illumination device. In addition, or alternatively, the choice of lens aperture and focal length may be varied, possibly in dependence on the illumination level and/or the size of component being imaged.

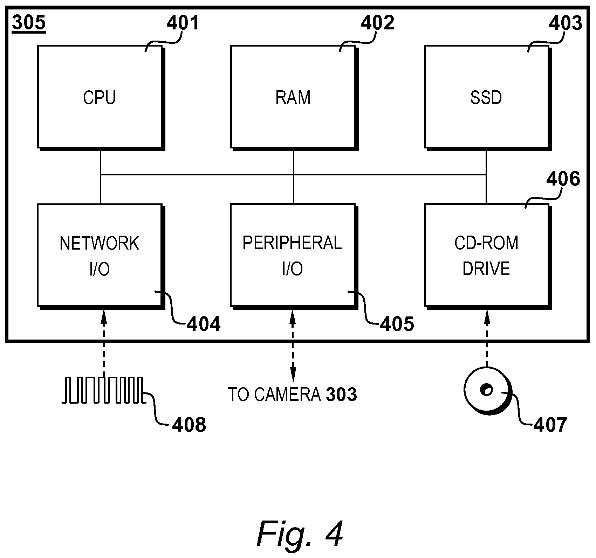

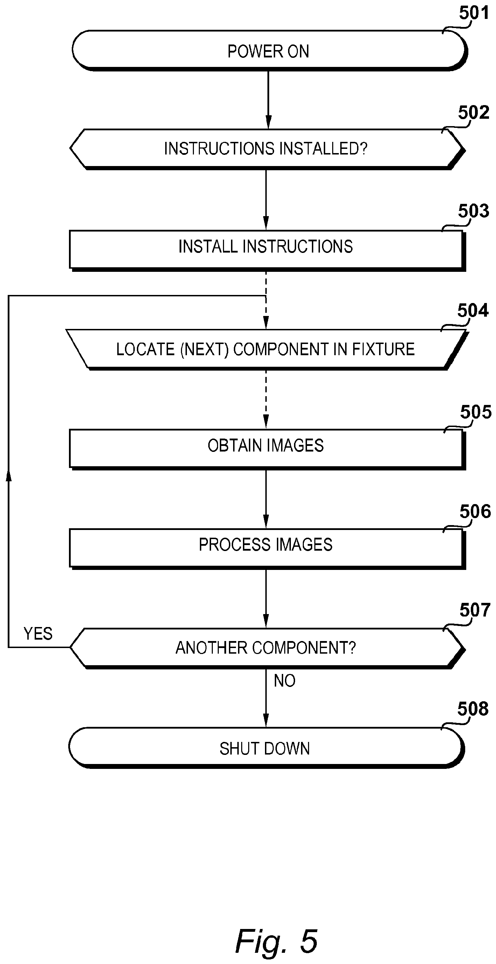

The measurement system **301** further comprises a processing device such as, in this example, a personal computer **305** to store and process the images obtained by the camera **304.** The devices within the personal computer **305** which enable it to process the images will be described with reference to Figure 4, whilst the instructions it executes will be described with reference to Figures 5 to 12.

In use, the measurement system **301** facilitates determination of the surface roughness by illuminating the surface of the component at a point **306** with coherent light produced by the laser **303.** An image of speckle caused by the scattering of the coherent light from the surface is then obtained by the camera **304.**

The image is then converted by the personal computer **305** into a binary image according to a threshold, thereby classifying pixels below the threshold as background pixels and pixels above the threshold as foreground pixels. The fractal dimension of the binary image is then evaluated. The fractal dimension is a statistical index of the complexity of the image, and it has been shown by the present inventors to correlate to the actual surface roughness. An indication of the surface roughness of the surface may then be outputted.

Devices within the personal computer **305** are illustrated in Figure 4.

The personal computer **305** comprises a processor such as a central processing unit (CPU) **401.** In this instance, central processing unit **401** is a single Intel (RTM) Core i7 processor, having four on-die processing cores operating at 3.2 gigahertz. It is of course possible that other processor configurations could be provided, and indeed several such processors could be present to provide a high degree of parallelism in the execution of instructions.

Memory is provided by random access memory (RAM) **402,** which in this example is double data rate (DDR) SDRAM totalling 8 gigabytes in capacity. RAM **402** allows storage of frequently-used instructions and data structures by the personal computer **305.** A portion of RAM **402** is reserved as shared memory, which allows high speed inter-process communication between applications running on personal computer **305.**

Permanent storage is provided by a storage device such a solid-state disk (SSD) **403,** which in this instance has a capacity of 512 gigabytes. SSD **403** stores operating system and application data. In alternative embodiments, a hard disk drive could be provided, or several storage devices provided and configured as a RAID array to improve data access times and/or redundancy.

A network interface **404** allows personal computer **305** to connect to a packet-based network such as the Internet. Additionally, personal computer **305** comprises a peripheral interface **405** such as a universal serial bus (USB (RTM)). In this embodiment, the peripheral interface **405** connects the personal computer **305** to the camera **304** to allow transfer of the images obtained in use. Whilst the peripheral interface **405** in the present embodiment is a wired USB (RTM) connection, it is contemplated that other connection types may be used such as wireless connections using, for example, an 802.11 x standard.

Personal computer **305** also comprises an optical drive, such as a CD-ROM drive **406,** into which a non-transitory computer readable medium such as an optical disk, e.g. CD-ROM **407** can be inserted. CD-ROM **407** comprises computer-readable instructions to enable the processing method of the present invention. These are, in use, installed on solid-state disk **403,** loaded into RAM **402** and then executed by CPU **401.** Alternatively, the instructions may be downloaded from a network via the network interface **404** as packet data **408.**

It is to be appreciated that the above system is merely an example of a configuration of system that can fulfil the role of personal computer **305.** Any other system having a processing device, memory, a storage device and a network interface could equally be used. Thus in an alternative embodiment it is envisaged that an application-specific integrated circuit (ASIC) or field-programmable gate array (FPGA) could be configured with the same instructions so as to perform substantially the same operations as the personal computer **305.**

Operations carried out with the measurement system **301** in practice are detailed in Figure 5.

At step **501,** the measurement system **301,** comprising the laser **302,** the camera **304** and personal computer **305,** is powered on. At step **502** a question is asked as to whether image processing instructions have been installed on the personal computer **305.** If not, then at step **503** the instructions are obtained either from CD-ROM **407** or via the network connection **404** as previously described. Following install, or if the instructions have previously been installed, then at step **504** a manual procedure is carried out consisting of locating a component, such as fan blade **201,** in the fixture **302.**

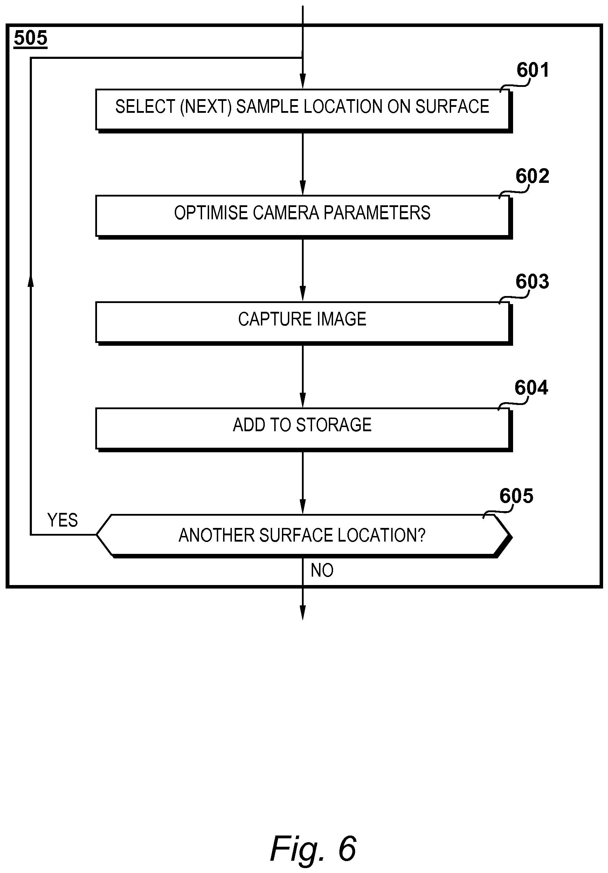

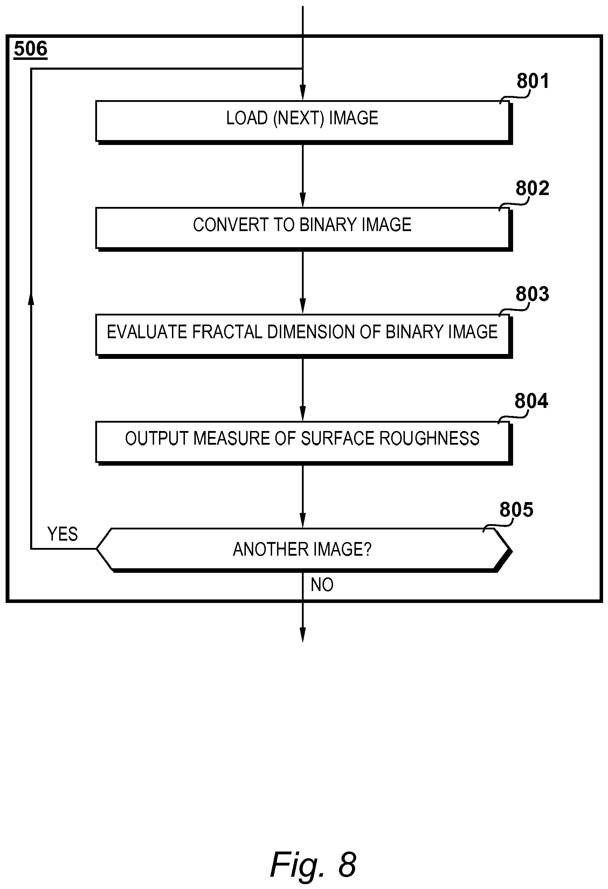

The measurement system **301** then captures images at step **505,** and processes them at step **506.** Procedures carried out to capture images during step **505** will be described with reference to Figure 6, whilst procedures carried out to process the images will be described with reference to Figures 8, 9 and 11.

Following processing of the images, a question is asked at step **507** as to whether another component is to be analysed. If this question is answered in the affirmative, then control returns to step **504** where the new component is located in the fixture **302.** If the question asked at step **507** is answered in the negative, then at step **508** the measurement system is shut down.

A procedure carried out during step **505** to obtain the images of the speckle caused by the scattering of the laser light from the surface of the component are set out in Figure 6.

At step **601,** a sample location on the surface of the component being imaged is selected. Depending on the size of the component, the width of the beam produced by laser **303,** and the requirements of the particular test regime being carried out, it will be appreciated that the sample location chosen may be one of few (perhaps even one), or one of a large number. In this step, the laser **303** and camera **304** may be positioned and angled to illuminate and collect light from the sample location.

At step **602,** the camera parameters are selected to produce a correct exposure. In the present example, the camera **304** has a fixed aperture lens and so in this step a metering operation takes place in which exposure length and sensor sensitivity are adjusted to give a correct exposure. Such procedures are known.

At step **603,** an exposure is taken of the speckle pattern caused by the scattering of the laser light by the surface at the sample location. The image produced by the camera **304** is then transmitted at step **604** to the personal computer **305,** whereupon it may be committed to storage on the solid-state disk **403.**

At step **605,** a question is asked as to whether any further surface locations are to be sampled. If so, then control returns to step **601** and the above procedures are repeated. If the question asked at step **605** is answered in the negative, then all surface locations have been imaged and step **505** is complete.

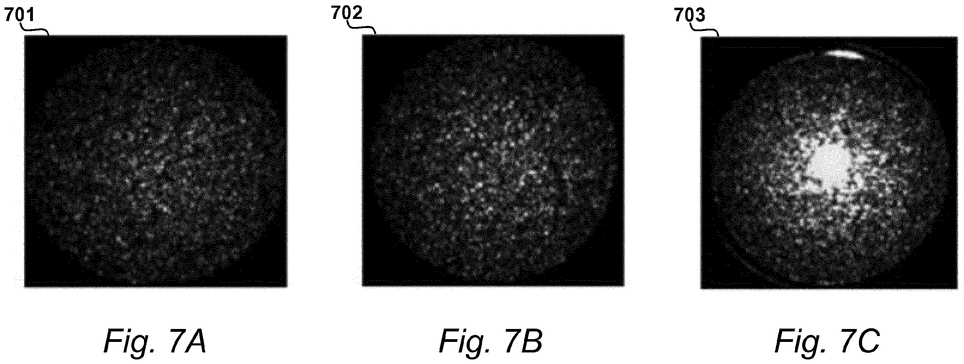

An image **701** is shown in Figure 7A, and is the speckle pattern of a surface location where the roughness was equivalent to 220 grit.

An image **702** is shown in Figure 7B, and is the speckle pattern of a surface location where the roughness was equivalent to 600 grit.

An image **703** is shown in Figure 7C, and is the speckle pattern of a surface location where the roughness was equivalent to 1500 grit.

As may be discerned from the images **701, 702** and **703,** the coarser the surface (the lower grit value in the present example), the lower the contrast in the image. The present invention therefore utilises an image processing scheme to quantify the differences between the speckle patterns caused by surfaces of different roughness, thereby allowing a determination to be made as to the roughness of the surface.

Steps carried out in the present embodiment by the personal computer **305** to process the images in step **506** are set out in Figure 8.

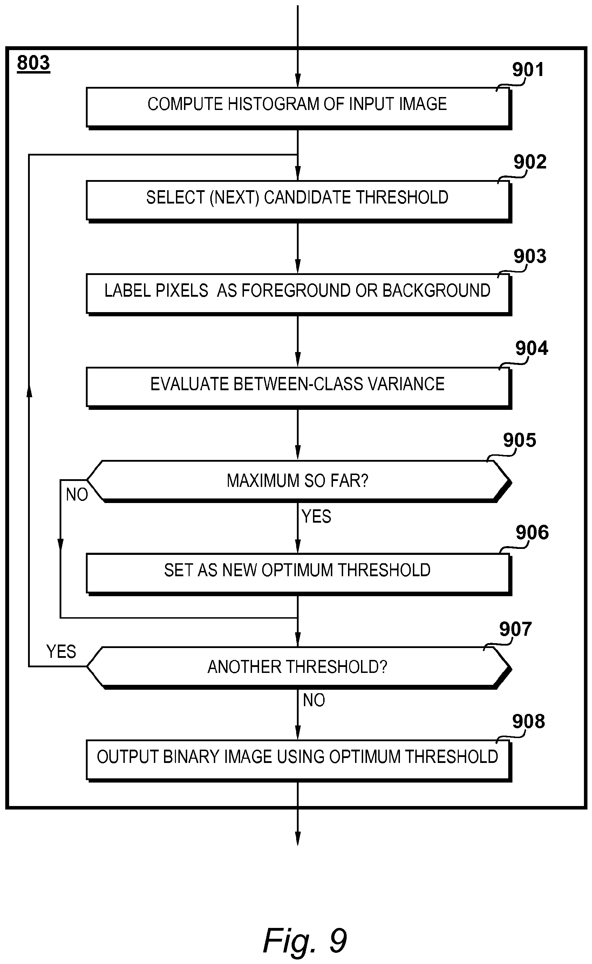

At step **801,** an image stored on the solid-state disk **403** at step **604** is loaded into memory for processing. At step **802,** the image is converted into a binary image, i.e. pixels are classified as either *foreground* pixels or *background* pixels depending upon their level in relation to a threshold. In the present embodiment, the threshold is one of a number of possible candidate thresholds. Selection of the candidate threshold to be used for foreground/background classification may performed unsupervised and automatically. This process will be described further with reference to Figure 9. In alternative implementations, the threshold may be chosen manually, or may be fixed.

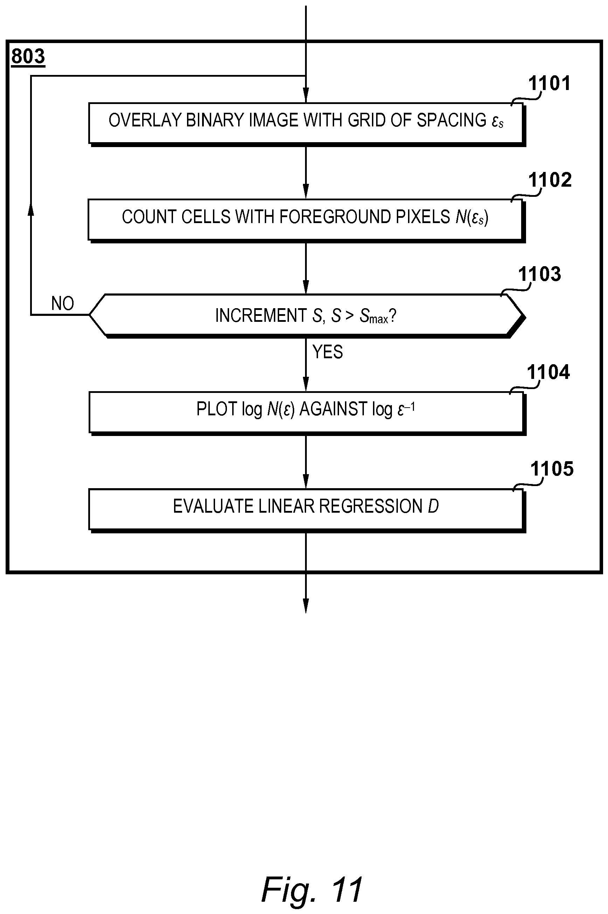

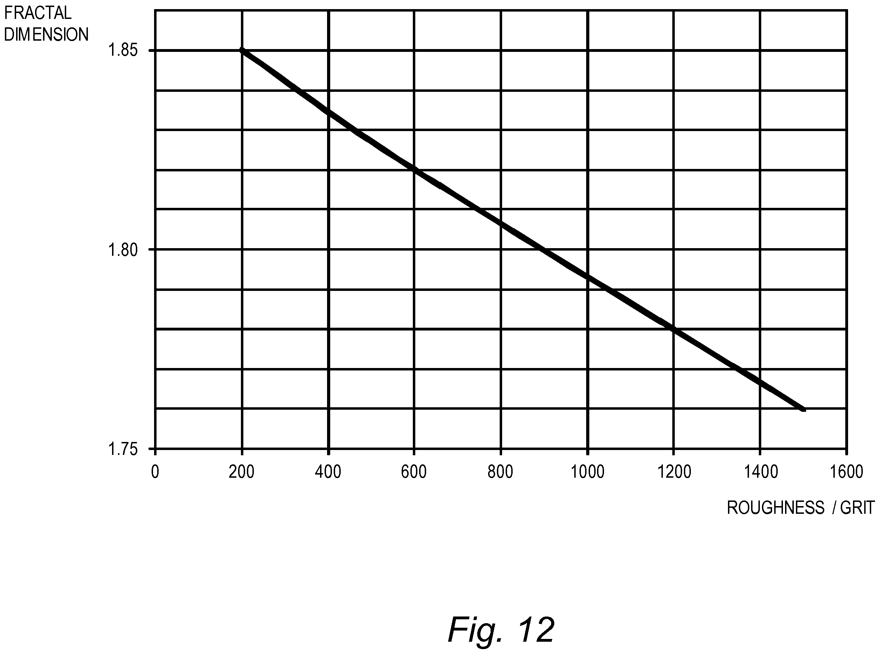

The fractal dimension of the binary image is then evaluated at step **803,** which process will be described with reference to Figure 11. In the present embodiment, the box-counting or Minkowski-Bouligand dimension is evaluated, although it will be appreciated that other fractal dimensions may be evaluated as an alternative. As will be described further with reference to Figure 12, the fractal dimension of an image correlates with the roughness of a surface.

In this way, an indication of a measure of the surface roughness may be output at step **804** by using a lookup table stored in memory to convert a fractal dimension into a measure of roughness, for example. Alternatively, a relation may be derived from empirical testing which may be stored as part of the program instructions of the present invention, which is then used during step **804** to convert the fractal dimension into a measure of surface roughness.

Following production of a measure of the roughness for the surface that caused the speckle pattern which was the subject of the image loaded at step **801,** a question is asked at step **805** as to whether any other images are to be processed. If so, control returns to step **801** where the next image is loaded for processing. If not, then the question is answered in the negative and step **506** is complete.

As described previously, in the present embodiment the procedure for conversion into a binary image may be carried out unsupervised and automatically. The processes carried out during step **802** to achieve this are set out in Figure 9.

At step **901,** the histogram of the image loaded into memory at step **801** is computed. As will be familiar to those skilled in the art, the histogram of an image comprises bins, each one of which represents a certain level. Each bin records the number of pixels in the image having that particular level.

At step **902,** a candidate threshold is selected. For the present case where the images produced by the camera **304** are 8 bit greyscale images, there may be 254 thresholds, corresponding to levels 1 to 254, which would respectively split the image into background pixels of level 0 and foreground pixels of level 1 and over, and background pixels of level 254 and under and foreground pixels of level 255. However, it will be appreciated that any number of thresholds could be provided, in any distribution. Thus for example, there may be 32 candidate thresholds, each separated by 8 levels. Alternatively, the distribution of thresholds may resemble a gamma curve for example, with lower level thresholds being more spaced apart than higher ones, for example.

Thus at step **903** the pixels in the image are classified as either foreground pixels if they are of greater than or equal level to the threshold, or background pixels if they are lower in level than the threshold.

The histogram produced at step **901** is then utilised to perform step **904.** In this step, the background pixels are considered a class $C_0$ and the background pixels are another class $C_1$. The probabilities of class occurrence or weights are $\omega_0$ and $\omega_1$, which are the zeroth order cumulative moments of the histogram either side of the threshold. The class mean levels are $\mu_0$ and $\mu_1$, which are the first order cumulative moments of the histogram either side of the threshold.

It may be shown that the optimum threshold is located at a point where there is both the lowest variance in the levels of the background pixels and the lowest variance in the levels of the background pixels, i.e. a minimised *within-class* variance. It may be shown that maximising the *between-class* variance is equivalent to minimising the within-class variance, and is more computationally efficient.

The between-class variance $\sigma_B^2$ is evaluated by calculating the product of the weights, multiplied by the square of the difference between the background mean and the foreground mean, i.e. $\omega_0\omega_1(\mu_0 - \mu_1)^2$.

At step **905,** a question is asked as to whether the value of $\sigma_B^2$ evaluated at step **904** is the maximum thus far. If so, then the candidate threshold selected at the current iteration of step **902** is set as the new optimum threshold. Then, or if the question asked at step **905** was answered in the negative, then a further question is asked as to whether another candidate threshold needs to be considered. If so, control returns to step **902** where the next candidate threshold is selected. If not, then control proceeds to step **908** where a binary image is outputted utilising the optimum threshold.

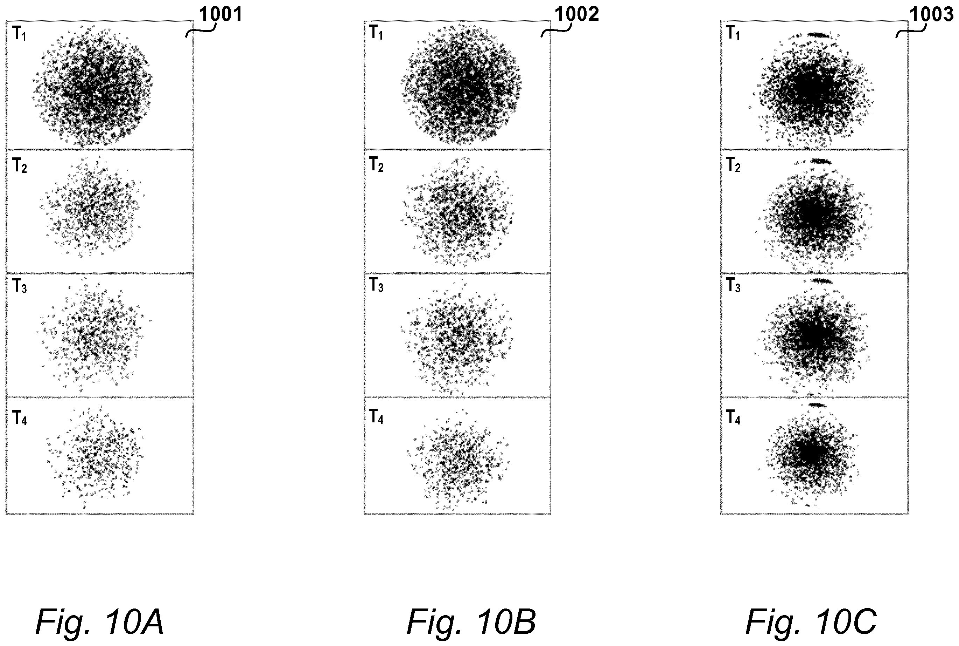

Binary images derived from the images of the speckle patterns **701, 702** and **703** are shown in Figures 10A, 10B and 10C respectively. The binary images were obtained by utilising four different candidate thresholds $T_1$ to $T_4$ during step **802.** In the present example, binary images **1001, 1002,** and **1003,** derived from image **701, 702,** and **703** respectively using a threshold $T_1$, were deemed to exhibit the maximal between-class variance. Thus threshold $T_1$ was selected as the threshold to use for the output step **908** for each iteration of step **802** as step **506** was applied to images **701, 702** and **703.** (It will be appreciated that given different input images more thresholds the result would be likely to be different.)

Procedures carried out to evaluate the fractal dimension of the binary image during step **803,** are set out in Figure 11.

As described previously, in the present embodiment the fractal dimension that is evaluated is the box-counting dimension, and thus step **804** evaluates this measure. It is however contemplated that other fractal dimensions may be measured, such as the Hausdorff or correlation dimensions.

Implementing in this example therefore the measurement of the box-counting dimension, at step **1101** a grid with regular spacing $\varepsilon_S$ is overlaid on the binary image produced at step **802.** In this example, S is an integer and provides an index to an array defining the grid cell sizes to utilise. In the present example, the cell sizes range from the size of the binary images, down to the pixel size. However, the number of grid cell sizes and how they partition the images may be varied depending upon the accuracy and/or processing speed required.

At step **1102,** the number of cells in the grid that contain at least one foreground pixels, $N(\varepsilon_S)$, is counted and stored for subsequent processing. At step **1103,** the integer S is incremented and a question is asked as to whether it is now greater than the largest value it may have, $S_{MAX}$. If not, then there is another grid cell size to use and control therefore returns to step **1102.**

Eventually, all grid cell sizes will be used and so control will proceed to step **1105,** where a log-log plot is made of $N(\varepsilon)$ against $\varepsilon^{-1}$. At step **1106,** the linear regression D of the points on the log-log plot is evaluated - this is the box-counting dimension of the binary image.

A plot of surface roughness - in this case grit number - against fractal dimension - in this case the box-counting dimension - is shown in Figure 12.

As described previously, and as may be seen from the plot, it has been found by the present inventors that there is a relationship between the roughness of a surface, and the fractal dimension of binary images derived from images of the speckle pattern caused by scattering of coherent light from the surface. In this case, there is a positive correlation, as the higher the roughness (the lower the grit number), the higher the fractal dimension.

It will be appreciated by those skilled in the art that the conversion to a binary image does impose latency in terms of the processing of the image loaded at step **801.** However, the use of a binary image for the basis of determining the fractal dimension means that a significant reduction in processing time at step **803** is achieved.

This is because the binary image simply classifies each pixel as being in one of two states, allowing the fractal dimension to be directly evaluated. By contrast, greyscale images, where each pixel may occupy one of a plurality of levels (e.g. 256 for an 8 bit image), require for example the differential box counting technique to be used, in which the output is only ever an estimate of the fractal dimension. In addition, the algorithmic complexity of such procedures causes far greater increases in processing time, than the inclusion of the conversion to a binary image as performed in the present invention.

Due to the reduction in processing time required by steps **802** and **803** it is envisaged that the present invention may be applied as part of a quality control measurement process within a live production environment.

It will be understood that the invention is not limited to the embodiments described herein, and various modifications and improvements can be made without departing from the concepts described. Except where mutually exclusive, any of the features may be employed separately or in combination with any other features and the invention extends to and includes all combinations and sub-combinations of one or more features described herein.

## Claims

1. A computer-implemented method to determine surface roughness, comprising:

    obtaining an image of speckle caused by the scattering of coherent light from a surface;
    converting the image into a binary image according to a threshold, thereby classifying pixels below the threshold as background pixels and pixels above the threshold as foreground pixels;
    evaluating the fractal dimension of the binary image, wherein the fractal dimension correlates with surface roughness;
    outputting an indication of the surface roughness of the surface.

2. The method of claim 1, further comprising the step of selecting the threshold from a plurality of candidate thresholds.

3. The method of claim 2, in which the selection from a plurality of candidate thresholds is performed unsupervised and automatically.

4. The method of claim 2 or claim 3, in which the threshold that is selected is the candidate threshold which produces a binary image with both the lowest variance in level between pixels classified as foreground pixels and the lowest variance between pixels classified as background pixels.

5. The method of claim 1, in which the fractal dimension is the box-counting dimension.

6. The method of claim 1, in which the obtaining step comprises:

    directing a coherent illumination device towards the surface;
    imaging the speckle pattern with an imaging device.

7. The method of claim 6, in which the coherent illumination device is a laser.

8. The method of claims 6 or claim 7, in which:

    the coherent illumination device generates light in the infrared band; and
    the imaging device is sensitive to the infrared band.

9. Instructions executable by a computer that, when executed by the computer, cause the computer to perform the method of any one of claims 1 to 5.

10. A computer-readable medium having the instructions of claim 9 encoded thereon

11. A measurement system for determining the roughness of a surface, comprising:

a coherent illumination device configured to illuminate the surface with coherent light;
an imaging device configured to obtain an image of speckle caused by the scattering of the coherent light from the surface; and
a processing device configured to:

convert the image into a binary image according to a threshold, thereby classifying pixels below the threshold as background pixels and pixels above the threshold as foreground pixels,
evaluate the fractal dimension of the binary image, wherein the fractal dimension correlates with surface roughness, and
output an indication of the surface roughness of the surface.

12. The measurement system of claim 11, in which the processing device is configured to select the threshold from a plurality of candidate thresholds.

13. The measurement system of claim 12, in which the processing device is configured to perform the selection from the plurality of candidate thresholds unsupervised and automatically.

14. The measurement system of claim 12 or claim 13, in which the processing device is configured to select the candidate threshold which produces a binary image with both the lowest variance in level between pixels classified as foreground pixels and the lowest variance between pixels classified as background pixels.

15. The measurement system of claim 11, in which the fractal dimension the processing device is configured to evaluate is the box-counting dimension.

*Fig. 1*

*Fig. 2*

*Fig. 3*

EP 3 385 905 A1

*Fig. 4*

**501**
POWER ON

**502**
INSTRUCTIONS INSTALLED?

**503**
INSTALL INSTRUCTIONS

**504**
LOCATE (NEXT) COMPONENT IN FIXTURE

**505**
OBTAIN IMAGES

**506**
PROCESS IMAGES

**507**
ANOTHER COMPONENT?

YES

NO

**508**
SHUT DOWN

*Fig. 5*

**505**

SELECT (NEXT) SAMPLE LOCATION ON SURFACE **601**

OPTIMISE CAMERA PARAMETERS **602**

CAPTURE IMAGE **603**

ADD TO STORAGE **604**

YES ANOTHER SURFACE LOCATION? **605**

NO

*Fig. 6*

701

702

703

*Fig. 7A*

*Fig. 7B*

*Fig. 7C*

EP 3 385 905 A1

**506**

LOAD (NEXT) IMAGE — 801

CONVERT TO BINARY IMAGE — 802

EVALUATE FRACTAL DIMENSION OF BINARY IMAGE — 803

OUTPUT MEASURE OF SURFACE ROUGHNESS — 804

YES — ANOTHER IMAGE? — 805

NO

*Fig. 8*

**803**

COMPUTE HISTOGRAM OF INPUT IMAGE — 901

↓

SELECT (NEXT) CANDIDATE THRESHOLD — 902

↓

LABEL PIXELS AS FOREGROUND OR BACKGROUND — 903

↓

EVALUATE BETWEEN-CLASS VARIANCE — 904

↓

MAXIMUM SO FAR? — 905

NO / YES

SET AS NEW OPTIMUM THRESHOLD — 906

↓

ANOTHER THRESHOLD? — 907

YES / NO

OUTPUT BINARY IMAGE USING OPTIMUM THRESHOLD — 908

*Fig. 9*

*Fig. 10A*

*Fig. 10B*

*Fig. 10C*

*Fig. 11*

Fig. 12

EP 3 385 905 A1

Europäisches
Patentamt

European
Patent Office

Office européen
des brevets

## EUROPEAN SEARCH REPORT

Application Number

EP 18 16 2766

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | HARIDAS ASWIN ET AL: "Fractal speckle image analysis for surface characterization of aerospace structures", PROCEEDINGS OPTICAL DIAGNOSTICS OF LIVING CELLS II, SPIE, US, vol. 10449, 13 June 2017 (2017-06-13), pages 104491T-104491T, XP060093460, ISSN: 0277-786X, DOI: 10.1117/12.2270769 ISBN: 978-1-5106-1723-0 * Section 3: Experimental Results and Discussion * | 1,5-11, 15 | INV. G06T7/00 G06T7/48 |
| Y | R.D. CORRÊA ET AL: "Fractal structure of digital speckle patterns produced by rough surfaces", PHYSICA A., vol. 392, no. 4, February 2013 (2013-02), pages 869-874, XP55468734, NL ISSN: 0378-4371, DOI: 10.1016/j.physa.2012.10.023 * page 869 - page 872 * | 1-15 | |
| Y | Audrey Karperien ET AL: ""Box Counting"", , 4 November 2016 (2016-11-04), XP055469089, Retrieved from the Internet: URL:https://web.archive.org/web/2016110408 0150/https://imagej.nih.gov/ij/plugins/fra clac/FLHelp/BoxCounting.htm [retrieved on 2018-04-20] * page 2 - page 5 * | 1-15 | |

TECHNICAL FIELDS SEARCHED (IPC)

G06T

-/--

The present search report has been drawn up for all claims

| Place of search | Date of completion of the search | Examiner |
|---|---|---|
| Munich | 18 June 2018 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 18 16 2766

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Anonymous: "Otsu's method - Wikipedia", , 12 January 2017 (2017-01-12), XP055468978, Retrieved from the Internet: URL:https://en.wikipedia.org/w/index.php?title=Otsu's_method&oldid=759649503 [retrieved on 2018-04-20] * page 1 - page 4 * ----- | 2-4, 12-14 | |
| A | DAVID KERR ET AL: "Assessment and visualisation of machine tool wear using computer vision", THE INTERNATIONAL JOURNAL OF ADVANCED MANUFACTURING TECHNOLOGY, SPRINGER, BERLIN, DE, vol. 28, no. 7-8, April 2006 (2006-04), pages 781-791, XP019324748, ISSN: 1433-3015, DOI: 10.1007/S00170-004-2420-0 * page 786 * * page 782 - page 783 * ----- | 1-15 | |

TECHNICAL FIELDS
SEARCHED      (IPC)

The present search report has been drawn up for all claims

| Place of search | Date of completion of the search | Examiner |
|---|---|---|
| Munich | 18 June 2018 | Rockinger, Oliver |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)